# EUROPEAN PATENT APPLICATION

(11) **EP 1 475 774 A1**
(43) Date of publication of application: **10.11.2004**
(21) Application number: 03252846.5
(22) Date of filing: 07.05.2003
(51) Int. Cl.: G09G 5/00, G06F 3/147, G06F 17/60

(54) **Display unit controlled by an ambient light detector**

(71) Applicant: Yang, Tai-Her, Si-Hu Town, Dzan-Hwa (TW)
(72) Inventor: Yang, Tai-Her, Si-Hu Town, Dzan-Hwa (TW)
(74) Representative: Pratt, David Martin

(57) **Abstract**

A light activated optically controlled display unit, by means of a photo-electric sensor, stops its operation when the background is dark or below a preset lightness; and is activated to exercise video output of text/graphic display, audio output, output of flaring model at a given cycle or stop of output operation at preset time and furthermore to provide automatically timed stop of light signals output function as required when the environment is bright or having a lightness higher than the preset value, or when having a consistent light source in the environment as the background that indicates changed brighter lightness with a change rate.

## Description

### BACKGROUND OF THE INVENTION

### (a) Field of the Invention

The present invention relates to a light activated optically controlled display unit, and more particularly to one that stops its operation when the background is dark or below a preset lightness; and is activated to exercise video output of text/graphic display, audio output, output of flaring model at a given cycle or stop of output operation at preset time and furthermore to provide automatically timed stop of output function as required when the environment is bright or having a lightness higher than the preset value, or when having a consistent light source in the environment as the background that indicates changed brighter lightness with a change rate exceeding the preset value, or that indicates changed flaring with the length of such changed flaring exceeding a preset time.

### (b) Description of the Prior Art:

Conventional optically controlled display unit is usually activated for display when the background gets dark.

### SUMMARY OF THE INVENTION

By means of a photo-electric sensor, a light activated optically controlled display unit of the present invention stops its operation when the background is dark or below a preset lightness; and is activated to exercise video output of text/graphic display, audio output, output of flaring model at a given cycle or stop of output operation at preset time and furthermore to provide automatically timed stop of output function as required when the environment is bright or having a lightness higher than the preset value, or when having a consistent light source in the environment as the background that indicates changed brighter lightness with a change rate exceeding the preset value, or that indicates changed flaring with the length of such changed flaring exceeding a preset time.

### BRIEF DESCRIPTION OF THE DRAWINGS

Fig. 1 is a circuit block chart of a preferred embodiment of the present invention, and
Fig. 2 is a circuit block chart of a source comprised of optical energy converted into electric energy in the preferred embodiment of the present invention.

### DETAILED DESCRIPTION OF THE PREFERRED EMBODIMENTS

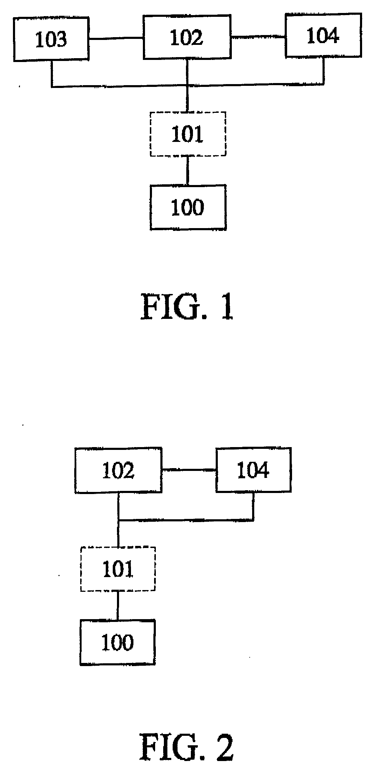

Conventional optically controlled display unit is usually activated when the background gets dark. The present invention is set to stop its operation when the background is dark or below a preset lightness; and is activated to exercise video output of text/graphic display, audio output, output of flaring model at a given cycle or stop of output operation at preset time and furthermore to provide automatically timed stop of output function as required when the environment is bright or having a lightness higher than the preset value, or when having a consistent light source in the environment as the background that indicates changed brighter lightness with a change rate exceeding the preset value, or that indicates changed flaring with the length of such changed flaring exceeding a preset time, Fig. 1 shows a circuit block chart of a preferred embodiment of the present invention, essentially comprised of:
- a source 100: related to a primary, or a secondary battery or any other device that converts optical energy into electric energy, or other DC source or AC converted to DC source, or a (dis) chargeable storage device, such as a secondary battery or a capacitor is incorporated to the device that converts optical energy into electric energy, and a switch 101 may be provided when required;
- a drive control circuit 102: related to a solid-state electronic device or a mechanical-electronic device to receive signals transmitted from the source 100 and an photoelectric sensor 103 for operating a display unit 104, which stops its operation when the background is dark or below a preset lightness; and is activated to exercise video output of text/graphic display, audio output, output of flaring model at a given cycle or stop of output operation at preset time and furthermore to provide automatically timed stop of output function as required when the environment is bright or having a lightness higher than the preset value, or when having a consistent light source in the environment as the background that indicates changed brighter lightness with a change rate exceeding the preset value, or that indicates changed flaring with the length of such changed flaring exceeding a preset time, and further to control time display on the display unit;
- a photoelectric sensor 103: related to a photo-electric transistor, a photo-beam gate, a photo-variable resistance (CDS), or any other device that converts optical energy into electric energy to change signals transmitted to operate the drive control circuit 102 depending on the lightness and a panoramic or fixed detection range may be provided for the photoelectric sensor 103 as required; and
- a display unit 104: related to a flat or curved display unit, or a projector display unit including combination of CRT, multi-point LEDs, OLEDs, PLEDs, PDPs, LCDs, TNLCDs, STNLCDs, TFTLCDs, or single-point LED or OLED, PLED, bulb, or other video display unit that converts electric energy into optical energy, or an audio display unit that converts electric energy into acoustic energy, or a combination of said video display unit and said audio display unit.

Referring to Fig. 1 for a preferred embodiment of the light activated optically controlled display unit, wherein, the photoelectric sensor 103 may be omitted if the source 100 is comprised of a device that converts optical energy into electric energy. Fig. 2 shows a circuit block chart of a source 100 comprised of a device that converts optical energy into electric energy for the circuit or of a (dis) chargeable storage device, such as a secondary battery or a capacitor is incorporated to the device that converts optical energy into electric energy as illustrated in Fig. 1 with the absence of the photoelectric sensor 103. When the background lightness falls below a preset value, the electric energy generated by the source 100 comprised of a device that converts optical energy into electric energy falls below a preset voltage, the drive control circuit 102 and the display unit 104 stop operating. On the other hand, when the lightness of the background is bright and above the preset value, or when having a consistent light source in the environment as the background that indicates changed brighter lightness with a change rate exceeding the preset value, or that indicates changed flaring with the length of such changed flaring exceeding a preset time, the electric energy generated by the source 100 comprised of a device that converts optical energy into electric energy rises above the preset voltage, then the drive control circuit 102 and the display unit 104 are inactivated to execute functions of text/graph video output for display, or audio output, flaring output of light signals in a model at a given cycle, or automatic stop of output operation at preset time.

The text/graph video display by the light activated optically controlled display unit relates to a static or dynamically variable pattern, and the flaring operation model at a given cycle relates to a fixed or adjustable model.

Furthermore, casing for the circuit in the light activated optically controlled display unit relates to an integrated, combined or separate structure. The casing is placed by known means, e.g., on a rack, standing-alone, wall-mounted, adhered, clamped, inserted, or attracted by magnetic force, or locked in position.

By means of a photo-electric sensor, the light activated optically controlled display unit of the present invention stops the operation of the drive control circuit 102 and the display unit 104 when the background is dark or below a preset lightness and is activated when the background is bright or above the present lightness or when having a consistent light source in the environment as the background that indicates changed brighter lightness with a change rate exceeding the preset value, or that indicates changed flaring with the length of such changed flaring exceeding a preset time, to execute video output of text/graph display, audio output, output of flaring model at a given cycle, or stop of output operation at a preset time for power saving. Therefore, the application is duly filed accordingly.

## Claims

1. A light activated optically controlled display unit, essentially comprised of:
- a source 100: related to a primary, or a secondary battery or any other device that converts optical energy into electric energy, or other DC source or AC converted to DC source or a (dis) chargeable storage device, such as a secondary battery or a capacitor is incorporated to the device that converts optical energy into electric energy, and a switch 101 may be provided when required;
- a drive control circuit 102 : related to a solid-state electronic device or a mechanical-electronic device to receive signals transmitted from the source 100 and an photoelectric sensor 103 for operating a display unit 104, which stops its operation when the background is dark or below a preset lightness; and is activated to exercise video output of text/graphic display, audio output, output of flaring model at a given cycle or stop of output operation at preset time and furthermore to provide automatically timed stop of output function as required when the environment is bright or having a lightness higher than the preset value, or when having a consistent light source in the environment as the background that indicates changed brighter lightness with a change rate exceeding the preset value, or that indicates changed flaring with the length of such changed flaring exceeding a preset time, and further to control time display on the display unit;
- a photoelectric sensor 103: related to a photo-electric transistor, a photo-beam gate, a photo-variable resistance (CDS), or any other device that converts optical energy into electric energy to change signals transmitted to operate the drive control circuit 102 depending on the lightness and a panoramic or fixed detection range may be provided for the photoelectric sensor 103 as required; and
- a display unit 104: related to a flat or curved display unit, or a projector display unit including combination of CRT, multi-point LEDs, OLEDs, PLEDs, PDPs, LCDs, TNLCDs, STNLCDs, TFTLCDs, or single-point LED or OLED, PLED, bulb, or other video display unit that converts electric energy into optical energy, or an audio display unit that converts electric energy into acoustic energy, or a combination of said video display unit and said audio display unit.

2. A light activated optically controlled display unit as claimed in Claim 1, wherein, the photo-electric sensor 103 may be omitted if the source 100 is comprised of a device that converts optical energy into electric energy or is comprised of a device that converts optical energy into electric energy for the circuit or of a (dis) chargeable storage device, such as a secondary battery or a capacitor is incorporated to the device that converts optical energy into electric energy with the absence of the photoelectric sensor 103; when the background lightness falls below a preset value, the electric energy generated by the source 100 comprised of a device that converts optical energy into electric energy falls below a preset voltage, the drive control circuit 102 and the display unit 104 stop operating; on the other hand, when the lightness of the background is bright and above the preset value, or when having a consistent light source in the environment as the background that indicates changed brighter lightness with a change rate exceeding the preset value, or that indicates changed flaring with the length of such changed flaring exceeding a preset time, the electric energy generated by the source 100 comprised of a device that converts optical energy into electric energy rises above the preset voltage, then the drive control circuit 102 and the display unit 104 are inactivated to execute functions of text/graph video output for display, or audio output, flaring output of light signals in a model at a given cycle, or automatic stop of output operation at preset time.

3. A light activated optically controlled display unit as claimed in Claim 1, wherein, the text/graph video display by the light activated optically controlled display unit relates to a static or dynamically variable pattern, and the flaring operation model at a given cycle relates to a fixed or adjustable model.

4. A light activated optically controlled display unit as claimed in Claim 1, wherein, a casing for the circuit in the light activated optically controlled display unit relates to an integrated, combined or separate structure.

5. A light activated optically controlled display unit as claimed in claim 1, wherein., the casing is placed by known means, e.g., on a rack, standing-alone, wall-mounted, adhered, clamped, inserted, or attracted by magnetic force, or locked in position.

6. A light-activated, optically-controlled display unit having a photo-electric sensor for stopping its operation when the background is dark or below a preset lightness; and is activated to exercise video output of text/graphic display, audio output, output of flaring model at a given cycle, or stop output operation at preset time, and furthermore to provide automatically-timed stop of light signals output function as required when the environment is bright or having a lightness higher than the preset value, or when having a consistent light source in the environment as the background that indicates changed brighter lightness with a change rate.
